# EUROPEAN PATENT APPLICATION

(11) **EP 2 199 365 A1**
(43) Date of publication of application: **23.06.2010**
(21) Application number: 08380340.3
(22) Date of filing: 18.12.2008
(51) Int. Cl.: C10B 53/02, C10B 57/02, C10L 5/44, C21B 13/00

(54) **Process for producing a recarburizer carbonaceous product**

(71) Applicant: REPSOL YPF S.A., 28046 Madrid (ES)
(72) Inventor: Rodriguez Reinoso, Francisco, 03003 Alicante (ES); Martinez Escandell, Manuel, 03600 Elda Alicante (ES); Jiménez Mateos, Juan Miguel, 28320 Pinto Madrid (ES)
(74) Representative: Pons Ariño, Angel

(57) **Abstract**

Process for the production of a recarburizer carbonaceous product from pyrolysis and carbonisation of lignocellulosic materials. Furthermore, the invention relates to the recarburizer carbon product produced by said process and its use for the production of casting, founding or steels.

## Description

The present invention relates to a process for the production of a recarburizer carbonaceous product from pyrolysed and carbonised lignocellulosic materials. Therefore, the invention is included in the field of metallurgy, and more specifically, in the field of metallurgy, siderurgy, steel industry and/or casting.

### PRIOR ART

Steelworks and foundries use a refined carbon as alloy-forming, reducer and fluxing agent for the production of the metal. This refined carbon, which can be graphite, high purity coke, etc., is used in order to increase the carbon content of the steel without introducing any external contaminant (especially sulphur, nitrogen and other metallic elements), to contribute to the reduction of the metal oxides, etc. Therefore, the higher the required quality of the final steel or metallic product, the lower the concentration of such contaminants must be, being the specifications in some case near zero.

The use of a recarburizer in the production of steel or founding becomes necessary due to the need for introducing carbon as alloy-former in the metal, in such a way that the metallic product reaches the proper characteristics. Even when scrap, instead of an iron ore, is used as raw material of steel or founding, which already has a certain carbon content, it is still necessary to introduce a component fundamentally constituted by carbon to compensate for the losses in this element during the manufacturing process of the metal and, therefore, to fix the final content in it.

Although the traditional material for said application is refined graphite, there currently exist and are typical synthetic alternative sources, in general carbonaceous products treated at high temperature, such as anthracites (normally treated above 1800° C) and calcined (around 1200-1400° C) petroleum cokes ("recarburizers").

Normally, recarburizer petroleum coke is obtained by coking of the so called fuel-oil of pyrolysis or pyrotar, which is a hydrocarbonated residue, fundamentally formed by carbon and hydrogen, with very low or zero content of sulphur, nitrogen and metals, resulting from the pyrolysis or thermal cracking of naphthas and other hydrocarbon products, including natural gas, for the production of petrochemical monomers, mainly ethylene and propylene. Said recarburizer coke is usually calcined between 1200 and 1400° C before its use for said purpose, in order to reduce its content in volatile compounds and increase at the same time the C/H ratio.

In general, calcined recarburizer petroleum coke is a product with a high carbon content (up to 99 % or higher) and practically zero content in "heteroatoms" (those elements other than carbon), except hydrogen and oxygen. Nonetheless, it may also contain a small quantity of sulphur, especially when the raw material is not a fuel oil of pyrolysis. In fact, the quality and the price of this coke will be in accordance with the content of heteroatoms, mainly sulphur. In this way, the highest quality and, therefore, most expensive recarburizar coke is that with sulphur content lower than 0.1 %.

Due to the increase in prices and lower availability of the traditional raw materials for this product (oil refining secondary streams, suitable natural graphite and anthracites, etc.) and the relatively high energy and environmental costs (specially caused by the contamination in the form of CO₂ emissions from non-renewable sources evolved during its production, except when the raw material is natural graphite or calcined anthracites using electricity from renewable sources), it is becoming necessary to find an alternative source of carbon which meets the required specifications for this application, such as a very low or zero content of sulphur, nitrogen, transition metals (except, evidently, iron), etc.

### DESCRIPTION OF THE INVENTION

The present invention provides an alternative to the carbonaceous products used as recarburizers, for instance graphite, calcined anthracite, calcined petroleum coke, etc. used in the metallurgic industry, using a lignocellulosic product as raw material. In this way, and by the process of the present invention, a solid carbonaceous product of high quality is obtained, maximizing the yield of this process to this solid carbonaceous product up to approximately 45%.

One aspect of the present invention relates to a process for the production of a recarburizer carbonaceous product by the pyrolysis and carbonization of a lignocellulosic material used as starting product or raw material (from now on process of the invention).

The term "pyrolysis" relates, in the present invention, to the thermal treatment of the materials at a temperature up to 500-600° C, in the absence of oxygen or other reagents. And the term "carbonization" relates in this description to the heat treatment of the material at a temperature above approximately 600-700° C.

"Recarburizer carbonaceous product" is understood to mean in the present invention a material capable of transferring carbon to a molten metal, both this carbon being finally part of the final alloy and acting as a reducer in the formation of said metal. On the other hand, due to the fact that this carbonaceous product contains calcium oxide and other alkaline and alkaline-earth metals, it can also act as fluxing agent. So that this carbonaceous product could carry out such effects, it has to own several characteristics, such as a very high carbon content, very low or null content of sulphur, low concentration of transition metals (except, obviously, iron), limited concentration of nitrogen, and low content of volatile mater once it is calcined (≤ 1 %).

The term "lignocellulosic materials" refers to those materials made up mainly of cellulose, hemicellulose and lignin. In a preferred embodiment of the process of the invention, these lignocellulosic materials include by-products generated during the production processes of some food, agrarian, agroalimentary or forest industries, and which can be recycled or reused via this process, such as, for example but without being limited to, by-products generated in the oil industry from olive, from sunflower or from any other seed or oleaginous product, such as, for example, soy or rapeseed; in the wine industry; in the beer industry; or in the fruit or nut packaging industry.

A more preferred embodiment of the process of the invention comprises the use of lignocellulosic materials selected from the list which comprises secondary products and/or waste from the oil production industry, such as, for example but without being limited to, pomace, oilseed, *alpechín (watery oil-foot or dregs of oil), alperujo* (mix of pomace and *alpechín*) or olive stones; fruit stones, such as, for example, but without being limited to, stones of olive, cherry, apricot, peach, plum, medlar, lychees or rambutan; shells of nuts, such as, for example, but without being limited to, shells of almond, hazelnut, pistachio, pine nut, cashew nuts, peanuts, jatropha or walnut; products of the wood such as, for example, but without being limited to, waste from the pruning of olive trees, forestry or other fruit culture; or any of its combinations. All these lignocellulosic materials are especially preferable for their use in the process of the invention due to its low content in transition metals and sulphur. From the above, the stones from fruit trees and or nut shells are preferable.

In an even more preferred embodiment of the process of the invention, olive stones are used as lignocellulosic material, as it is the product, ftom all the aforementioned, of lower content in ash (around 0.6%) and of very low or practically zero content in sulphur and in transition metals, particularly V and Ni. Furthermore, the olive stones are usually a by-product of the oil industry, no previous special treatment of the lignocellulosic material being necessary, except on some occasions wherein the following may the advisable: screening (to eliminate fines, gravel or any other contaminant), washing with water and/or subsequent drying, before subjecting it to the corresponding pyrolysis.

Another preferred embodiment of the process of the invention comprises the following steps:
a. pyrolysis of a lignocellulosic material in the conditions described below:
   - at a temperature of between 300 °C and 600 °C, preferably between 400 °C and 500 °C and more preferably around 450 °C;
   - at a pressure of up to 10 atm (around 10 bars), preferably up to 5 atm (5.066 bars), and more preferably up to 3 atm (around 3.5 bars), at an atmospheric pressure or ambient pressure;
   - a residence time of at least 1 min, preferably between minutes and weeks, more preferably between minutes and days, even more preferably between hours and days, and more preferably between 4 h and 10 h; and
   - at a heating rate between 0.1 °C/min at 50 °C/min, preferably between 0.5 °C/min and 5 °C/min., and more preferably between 1 and 2 °C/min.
   - optionally, it is possible to introduce, in the pyrolysis process a purge of inert (e.g. N₂) or hydrocarbon (methane, natural gas, etc.) gases, preferably natural gas, with a capacity up to 500 cc/min, preferably up to 100 cc/min, and more preferably in static atmosphere, i.e. without purge gas and always letting the pyrolysis gases exit in order to maintain the pressure at the values indicated above.
b. heating of the material produced in step (a) at a sufficient temperature to eliminate the volatile compounds of this pyrolysed material. This temperature will be over 500° C, preferably between 500°C and 1400°C, and more preferably between 700°C and 1000° C.

Much of these lignocellulosic materials can be directly used in the process of the invention without the need for special pre-treatment, as it is the case, previously described of by-products such as olive stones from the production of the olive oil. These stones can be directly used, even without being previously ground as they are at a proper size for their pyrolysis.

Nevertheless, in other cases, depending on the lignocellulosic material used, certain pre-treatment of the material may be necessary before its pyrolysis. For example, in the case of the *alperujo* and of the oilseeds, as there is a high ash content, a prior washing with hydrochloric or sulphuric acid may be necessary. Furthermore, in these cases, especially for the *alperujo,* or others, such as, for example, pruning materials or fruit stones, a prior drying may be necessary, given their high water content.

Therefore, optionally, the process of the invention comprises a prior pretreatment step of the lignocellulosic material which will depend on the specific type of material used as raw material.

On the other hand, the gases produced in the process of the invention, including the purge gases, can be reused in a cogeneration process, whereby heat and electrical energy is produced, and which may be used as power supply for the production plant of the recarburizer carbonaceous product, even possibly generating a surplus.

Furthermore, this cogeneration process avoids condensation of the gases produced in the process of the invention. The condensation of these tars will produce a liquid, usually call "bio-oil", the handlinf of which is quite complicated, as it has a very high content in water, acetic acid, phenols and polyphenols, and other organic compounds, supposing a counterproductive waste for the environment, which cannot be directly dumped. On the other hand, the burning of this stream eliminate any product, avoiding the emission of harmful products into the atmosphere as all the products are converted in CO₂ (from a renewable source) and water, at the same time that they are used for energy production.

The carbonaceous product produced according to the process described in this invention shows several characteristics that make it specially advantageous for its application as recarburizar and with a very high metallurgical yield, that is to say, with a high capacity to transfer carbon to the molten metal. In this way, this product is a feasible alternative to the classic recarburizer coke.

The recarburizer carbonaceous product of the invention has a high carbon content, over 95% by weight; a low or zero content of sulphur, less than 0.1% by weight; transition metals at trace levels (preferably less than 50 or 100 ppm), except iron (which does not interfere, as with the other transition metals, in the properties of the end product); an acceptable ash content and a very low content in volatile compounds (≤ 1% by weight).

Therefore, another aspect of the present invention relates to a recarburizer carbonaceous product obtainable by the process of the invention.

Another aspect of the present invention relates to the use of the recarburizer carbonaceous product for the production of casting, foundring or steels.

Throughout the description and the claims, the word "comprises" and its variants do not aim to exclude other technical characteristics, additives, components or steps. For persons skilled in the art, other objects, advantages or characteristics of the invention are partly gathered from the description and partly from the practice of the invention. The following examples and figures are provided by way of illustration and do not aim to be limitative of the present invention.

### DESCRIPTION OF THE FIGURES

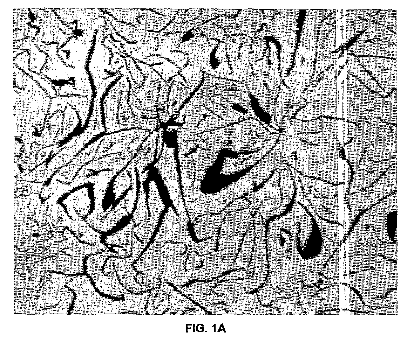

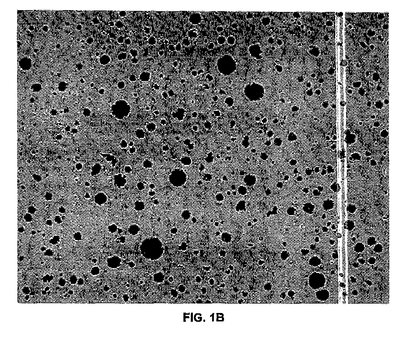

Fig. 1.- Represent the metallographic images of the castings performed with the recarburizer produced according to the conditions indicated in example 1. Fig. 1A: gray cast-iron run; and Fig. 1B: nodular iron run.

### EXAMPLES

Below, we will illustrate the invention by tests performed by the inventors, which reveal the effectiveness of the process of the invention.

### EXAMPLE 1.

A sample of product was prepared from olive stones according to the following conditions:
- Starting material: olive stones from the manufacturing of table olives, ground and screened to a particle size of between 2-3 mm, washed with distilled water and air dried.
- Pyrolysis conditions:
   ○ Final temperature: 700 °C
   ○ Isothermal time at 700 °C: 1 h
   ○ heating rate: 10°C/min
   ○ purge: N₂ 900 ml/min

The process was carried out in a rotary tubular furnace, "kiln" type. The yield in these conditions was around 25 %.

The material was calcined according to the standard production process for recarburizer petroleum coke (static calcination at 1150 °C for 20 h). The losses during the calcinations were 7.8 %, the end product maintaining 4.8 % of volatile compounds, In total, a sample of around 4 kg was calcined in a single batch. The characteristics of both the pyrolysed and the carbonised materials are included in Table I.

**Table I. Characteristics of the pyrolysed and carbonised materials produced in this example.**

| **sample** | **pyrolysed** | **carbonised** |
|---|---|---|
| yield (%) | 25 | 92,2 |
| volatile compounds (%) | - | 4.8 |
| ash (%) | 1.25 | 2.2 |
| C | 92.04 | 97.05 |
| H | 1.85 | 0.19 |
| N | 0.43 | 0.26 |
| S | < 0.1 | 0.22 |
| O | 2.98 | - |

To carry out the experiments of recarburization of steels with the material prepared according to the process described above, an industrial induction furnace of 400 Kg maximum capacity and 300 kW of power was used, starting from base type metal composed of 70% ingot and 30% steel.

The experiments consisted of preparing a grey cast iron run and another nodular iron run. In the case of grey cast run, the metallurgic yield test was carried out, taking the metal from a low carbon up to a slightly hypereutectic compositions. The determination of carbon content was carried out by means of chemical analysis tests of different samples of the casting by optical spectrometry. On the other hand, the objective of performing the spheroidal nodular iron run was to determine the metallurgic quality of the resulting founding, by metallographic analysis and mechanical tests, the traction test being the most important.

Before starting to add the recarburizer material the base metal was heated up to a temperature of approximately 1430 °C. Throughout the recarburizer addition process, the temperature of the molten metal was maintained in the range 1420-1440 °C. The recarburizer was added gradually, in accordance with the stages indicated in Table II. In each step, a quantity of recarburizer was added, as indicated in Table II, letting it incorporate into the molten metal for a time, taking a sample of the metal for analytical purposes and then re-adding the recarburizer. On reaching minute 50 of the test, a sample was taken, recarburizer was no longer added and the heating was increased in order to reach that of casting (1510-1520 °C).

The grey iron run was inoculated in the casting ladle, samples were taken for chemical analysis and subsequently wedges and metallographic controls were cast. The casting temperature was 1440°C (+/- 5°C) in both cases (wedges and controls). After that, the same base molten metal was used for the casting of the nodular iron run, adding 200 g of recarburizer to compensate for the losses of the new heating. After the inoculation and nodulization process in the casting ladle, the operation of casting of controls and samples was repeated. The casting temperatures were the same as in the previous process (1510-1520°C).

**Table II. Process of addition of recarburizer material.**

| **Time (min)** | **Quantity added (g)** |
|---|---|
| 0 | 200 |
| 5 | 400 |
| 15 | 400 |
| 25 | 400 |
| 35 | 400 |
| 45 | 200 |
| 50 | --- |
| **Total added** | 2000 g |

With this experiment it was verified that the carbon contained in the recarburizer dissolves in the molten metal, attaining the maximum concentration, close to 3.8 %, in the sixth addition, with a total yield of the process of 66 %. The metallography of the grey iron run showed the expected characteristics of high carbon hypereutectic castings, with different types of lamellar graphite, observing a predominance of flakes of type C (see Fig. 1A). This microstructure corresponds with hypereutectic chemical analysis, in good agreement with the analytical results. In the micrography included in Fig. 1B, corresponding to nodular iron, it is possible to observe a largely ferritic matrix, whose nodule size is 5-6 and its density 150 Nod/mm². Evidently, given the practically zero sulphur content of the recarburizer product used, the concentration of this impurity in the steel is maintained constant throughout the experiment and the same as that of the starting metal (0.006 %)

In order to ensure that the mechanical characteristics shown by the alloy using this recarburizer are suitable, traction and hardness tests were carried out on standardized specimens of nodular iron controls (standard EN 10.002.1, UNE-IN-ISO 6506-1, see Table III). In accordance with these results, it is concluded that the material produced using this type of recarburizer is absolutely valid for the manufacturing of high-resistance casting (nodular and CGI). The low yield produced is due to the test being carried out in intentionally problematic conditions as regards the incorporation of carbon in the metal, such as very high temperatures and carbon content close to the eutectic, in order to verify the suitable behaviour as recarburizer of the material here exemplified.

**Table III. Mechanical properties of the nodular iron prepared with the recarburizer product described in Example 1, according to standard EN 10.002.1, UNE-IN-ISO 6506-1 Specimen diameter: 13.9 mm; specimen section: 151.8 mm².**

| **parameter** | **value** |
|---|---|
| **TRACTION** | |
| Total elastic limit (0.2%, kN) | 53.73 |
| Unitary elastic limit (0.2 %, MPa) | 354 |
| Maximum load (kN) | 73.32 |
| Tensile strength (MPa) | 483 |
| Elongation (base 70 mm, %) | 18 |
| Final diameter (mm) | 12 |
| Stricture (%) | 24.2 |

| **HARDNESS** | |
|---|---|
| HBW 10/3000/15 type | 165 |

### EXAMPLE 2.

In this example, olive stones from the olive oil production industry were used. They were washed with a 10% sulphuric acid solution, followed by another wash with distilled water. The sample, previously air dried, it was pyrolysed at 500 °C for 6 h, using a heating rate of 1 °C/min. In order to be able to compare, a sample of pyrolysed product was obtained using exactly the same conditions, except the wash with diluted sulphuric acid, which was not carried out. Table IV compares the properties of both materials before pyrolysis, and in Table V those of the corresponding pyrolised products.

**Table IV. Comparison of the properties of the olive stones from the olive oil industry washed simply with distilled water (stone A) and those washes with sulphuric acid and later with distilled water (stone B).**

| | **stone A** | **stone B** |
|---|---|---|
| humidity (%) | 8.0 | 11.0 |
| ash (%) | 0.36 | 0.11 |
| volatile compounds (%) | 77.3 | 78.3 |

**Table V. Comparison of the properties of the products pyrolysed at 500 °C for 6 h (heating rate: 1 °C/min) of stones A and B described in Table IV.**

| | **stone A** | **stone B** |
|---|---|---|
| yield (%) | 31.8 | 33.9 |
| volatile compounds (%) | 10.0 | 11.0 |
| ash (%) | 0.86 | 0.30 |

From the details shown in Tables IV and V it is gathered that the wash with acid has two net effects, namely, the reduction in ash content and the increase in the carbon yield, without affecting the content of volatile compounds.

### EXAMPLE 3.-

As previously described, the process for producing the useful carbonaceous product as recarburizer from lignocellulosic materials may be done in two stages, a first of pyrolysis, with a thermal treatment between 300-600 °C, and another of carbonization between 500-1400 °C, or in a single step.

Table VI shows the characteristics of a material produced by pyrolysis of olive stone at 500 °C for 6 h and two carbonised materials produced from this at temperatures of 800 °C and 1000 °C, in both cases for one hour. In both cases a product is achieved with volatile matter content acceptable for the application described in the present invention.

**Table VI. Properties of the carbonaceous product produced by pyrolysis at 500 °C for 6 h of olive stone from the olive oil, as well as of the carbonised product at 800 °C and 1000 °C for 1 h, in both cases from the same pyrolysed sample.**

| | **Pyrolysed** | **Carbonised** | |
|---|---|---|---|
| | 500°C | 800 °C | 1000 °C |
| Process yield (%) | 32.4 | 87.2 | 87.0 |
| Overall yield (%) | 32.4 | 28.3 | 28.2 |
| volatile compounds (%) | 11.0 | 3.0 | 2.0 |
| ash (%) | 0.86 | 1.21 | - |

### EXAMPLE 4

As indicated in example 3, it is possible to obtain a recarburizer carbonaceous material from lignocellulosic products by treatment thereof with a single heat treatment. Table VII shows the characteristics of the materials produced from olive stones resulting from the manufacturing of olive oil by carbonization at 900 °C for 1 and 6 h, applying a heating rate of 1 °C/min. As gathered from this table, the results are similar to those reached in the two-stage process (pyrolysis and carbonisation).

**Table VII. Properties of the carbonaceous material produced by carbonization at 900 °C for 1 and 6 h of olive stone from the olive oil manufacturing process.**

| | 1 h | 6 h |
|---|---|---|
| yield (%) | 28.4 | 26.0 |
| volatile compounds (%) | 8.0 | 2.0 |
| ash (%) | 0.95 | 1.24 |

### EXAMPLE 5

Table VIII lists a series of different lignocellulosic materials (olive stone, peach stone, almond shell, jatropha shell and pruning products from the maintenance tasks of the olive tree), including the more significant properties for the purpose of the invention, and table IX includes the characteristics of the carbonaceous products produced from said raw materials by pyrolysis in a dynamic atmosphere of N₂ (100 ml/min) at 500 °C for 6 h, using a heating rate of 1 °C/min.

**Table VIII. Properties of the raw materials used in this example: olive stone (HA), peach stone (HM), almond shell (CA), jatropha shell (CJ) and olive pruning (PO).**

| | **HA** | **HM** | **CA** | **CJ** | **PO** |
|---|---|---|---|---|---|
| humidity (%) | 8.0 | 9.0 | 14.0 | 8.0 | 10.0 |
| volatile compounds (%) | 77.3 | 77.0 | 79.0 | 71.0 | 77.2 |
| ash (%) | 0.36 | 0.04 | 0.05 | 2.40 | 2.20 |

**Table IX. Properties of the carbonaceous materials produced by pyrolysis at 500 °C for 6 h of olive stone (HA), peach stone (HM), almond shell (CA), jatropha shell (CJ) and olive pruning (PO).**

| | **HA** | **HM** | **CA** | **CJ** | **PO** |
|---|---|---|---|---|---|
| yield (%) | 31.8 | 29.9 | 27.8 | 36.0 | 26.9 |
| volatile compounds (%) | 10,0 | 11.0 | 11.0 | 11.0 | 16.0 |
| ash (%) | 0.86 | 0.90 | 1.05 | 6.22 | 7.60 |

As it can be observed in Table IX, all these products give rise to a material suitable for the application, especially in the case of the fruit stones (olive and peach) and nut shells (almond), In the case of the jatropha shell and the olive tree pruning the main drawback is the high ash content, although if the material is washed in accordance with the process described in example 2 this content is significantly reduced.

## Claims

1. Process for producing a recarburizer carbonaceous product **characterized in that** it uses as raw material a lignocellulosic material, which comprises:
a. pyrolysis of the raw material; and
b. carbonization of the raw material pyrolysed in (a).

2. Process according to claim 1, wherein the lignocellulosic material is a by-product and/or waste from the agricultural, food or forest industry.

3. Process according to claim 2, wherein the lignocellulosic material comes from the oil industry.

4. Process according to claim 2, wherein the lignocellulosic material comes from fruit stones or shells of nuts.

5. Process according to either of claims 3 or 4, wherein the lignocellulosic material is olive stones.

6. Process according to any of claims 1 to 5, which comprises:
a. the pyrolysis of a lignocellulosic material at a temperature between 300 °C and 60 0°C, at a pressure up to 10 bars, a residence time of at least 1 min. and a heating rate of between 0.1 to 50 °C/min.

7. Process according to claim 6, wherein the pyrolysis of step (a) is carried out at a temperature between 400 and 500° C.

8. Process according to claim 6, wherein step (a) is carried out at a pressure up to 3,5 bars.

9. Process according to claim 6, wherein the residence time of step (a) is between 4 and 10 hours.

10. Process according to claim 6, wherein the heating rate of step (a) is between 1 °C/min, and 2 °C/min.

11. Process according to any of claims 1 to 10, which comprises:
b. the carbonization of the material produced in step (a) at a temperature between 500° C and 1400° C.

12. Process according to claim 11, wherein step (b) is carried out at a temperature between 700 °C and 1000 °C.

13. Process according to any of claims 1 to 12, that furthermore comprises:
c. recycling of the gases produced in the same process by a cogeneration process.

14. Recarburizer carbonaceous product obtainable by the process according to any of claims 1 to 13.

15. Use of the recarburizer carbonaceous product according to claim 14, for the production of casting, founding or steels.
